# EUROPÄISCHE PATENTSCHRIFT

(11) **EP 1 182 872 B1**
(45) Veröffentlichungstag und Bekanntmachung des Hinweises auf die Patenterteilung: **15.07.2009**
(21) Anmeldenummer: 01118953.7
(22) Anmeldetag: 04.08.2001
(51) Int. Cl.: H04N 7/10

(54) **Kommunikationssystem**
Communication system
Système de communication

(30) Priorität: 04.08.2000 ES 200002047; 04.08.2000 ES 200002048; 04.08.2000 ES 200002050
(43) Veröffentlichungstag der Anmeldung: 27.02.2002
(73) Patentinhaber: TELEVES, S.A., 15706 Santiago de Compostela (ES)
(72) Erfinder: De Una Pinero, Rafael, c/o Televés, S.A., 15706 Santiago de Compostela (ES); Barreiro Taboada, Carlos, c/o Televés, S.A., 15706 Santiago de Compostela (ES); Fernandez Carnero, José Luis, c/o Televés, S.A., 15706 Santiago de Compostela (ES)
(74) Vertreter: Dosterschill, Peter

(56) Entgegenhaltungen:
- DE-A- 2 951 544
- DE-A- 19 811 826
- US-A- 6 038 425

## Beschreibung

Die Erfindung betrifft ein Kommunikationssystem nach dem Oberbegriff des Anspruchs 1.

Es sind bereits sogenannte MATV/SMATV-Systeme bekannt, das heißt Gemeinschaftsantennensysteme, die Fernsehsignale terrestrischer Sender oder Satelliten empfangen und zu verschiedenen Systemkomponenten führen, die Benutzern des Systems zugeordnet sind. Diese Systeme bestehen im wesentlichen aus einer Einheit, die die Fernsehsignale terrestrischer Sender oder Satelliten empfängt, aus einer Kopfeinheit, die die empfangenen Signale anpasst und verstärkt, und aus einem Verteilnetz, über das die Signale zu den Systemkomponenten übertragen werden, die den Systembenutzern zugeordnet sind.

Die Anzahl der Benutzer dieser MATV/SMATV-Systeme ist höchstens auf einige Hundert beschränkt; die Signale, die in den Systemen verteilt werden, werden in keinem Fall in dem jeweiligen Netz generiert.

Auf dem Markt ist zur Zeit eine große Zahl von Komponenten für diese Systeme verfügbar. Diese Komponenten dienen ausschließlich dem Empfang, der Anpassung und der Verteilung von Fernseh- und Radiosignalen.

Aus der Deutschen Patentanmeldung DE 198 11 826 A1 ist eine Vorrichtung und ein Verfahren für das Bereitstellen eines PC-Kommunikations- und Internet-Dienstes unter Verwendung einer Set-Top-Box bekannt, die mit einem Netz für D-CATV und VOD-Dienste verbunden ist. Die Vorrichtung umfasst eine PC-Schnittstelle, die in der Set-Top-Box installiert ist, um mit dem PC zu kommunizieren, und ein Internet-Gateway, das an der Kopfstelle des D-CATV vorbereitet ist, um einen Internet-Dienstkanal zwischen einer Internet-Datenautobahn und einem D-CATV Teilnehmer zu liefern.

Aus der Deutschen Patentanmeldung DE 3524094 A1 ist bereits ein Nachrichtensystem bekannt, das mit einer Gemeinschaftsantenne (30) verbunden ist. Das bekannte System weist ein Antennenkabel (26) auf, an das Empfangsstationen (38) und eine sogenannte Außentürbedientafel (10) angeschlossen ist; es ermöglicht Verbindungen zwischen der Außentürbedientafel (10) und jeweils genau einer Empfangsstation (38). Hierzu wird genau ein Analogkanal verwendet, der für alle Wohnungen gleich ist, die an das System angeschlossen sind. Die Belegung dieses Analogkanals wird durch eine Zentrale gesteuert, die allen Empfangsstationen zugeordnet ist, wobei die Steuerung in der Weise erfolgt, dass jeweils nur eine Sprechverbindung besteht.

Ausgehend von diesem Stand der Technik liegt der Erfindung die Aufgabe zugrunde, ein Kommunikationssystem der eingangs genannten Art anzugeben, das weitere Nutzungsmöglichkeiten erlaubt.

Diese Aufgabe wird durch ein Kommunikationssystem gelöst, das in den Ansprüchen definiert ist.

Die Erfindung weist eine Mehrzahl von Vorteilen auf.

In vorteilhafter Weise ist eine erste Ausführungsform des erfindungsgemäßen Kommunikationssystems in der Weise ausgestaltet, dass eine Zentral-Steuerungseinheit Kommunikationsverbindungen zwischen mindestens zwei Benutzerendgeräten steuert; ebenso steuert die Zentral-Steuerungseinheit Kommunikationsverbindungen, an denen mindestens ein Benutzerendgerät und/oder mindestens eine andere Systemeinheit und/oder ein weiteres Kommunikationssystem beteiligt ist. Die Funktion der Zentral-Steuerungseinheit kann beispielsweise auch durch ein Benutzerendgerät und/oder eine andere Systemeinheit ausgeübt werden.

Das erfindungsgemäße System vereint damit die Vorteile eines Gemeinschaftsantennen(MATV/SMATV-)Systems mit den Vorteilen eines Kommunikationssystems, wie beispielsweise einer Nebenstellenanlage für Sprache, Bilder und/oder Daten. Es ermöglicht unter anderem Sprach- und Datenverbindungen einerseits zwischen Wohnungen einer Wohnanlage untereinander sowie jeweils mindestens einer Wohnung und einer Pförtner- bzw. Türkommunikationseinheit andererseits.

Das erfindungsgemäße Kommunikationssystem ist darüber hinaus mit einem weiteren Kommunikationssystem verbindbar, insbesondere mit einem öffentlichen Fest- und/oder Mobil-Fernmeldenetz (Schnurlos- bzw. "Wireless"-Systeme).

Eine weitere Ausführungsform des erfindungsgemäßen Kommunikationssystems ist dadurch gekennzeichnet, dass das Kommunikationssystem eine Signalbearbeitungseinheit (Kopfeinheit) aufweist, die Signale, die über die mindestens eine Antenne empfangen werden, bearbeitet. Die Signalbearbeitungseinheit ist erfindungsgemäß beispielsweise von einem Benutzerendgerät steuerbar. Der Systembenutzer erhält damit in die vorteilhafte Möglichkeit, aus einer Mehrzahl von Fernsehkanälen, die in das System eingegeben werden, vorgegebene Fernsehkanäle auszuwählen. Das erfindungsgemäße Kommunikationssystem lässt sich auch von einer systemexternen Einheit bzw. von externen Systembetreuern (Installateure, Spezialisten wie Wartungspersonal, ...) konfigurieren bzw. warten, ohne dass sich diese an den Ort des Systems zu begeben hätten.

Eine weitere Ausführungsform des erfindungsgemäßen Kommunikationssystems ist dadurch gekennzeichnet, dass das Kommunikationssystem in der Weise ausgestaltet ist, dass die Kommunikationsverbindungen mittels digitaler Signale gesteuert werden. Damit lässt sich eine Vielzahl von Funktionen wie beispielsweise die Verwaltung von Berechtigungen der verschiedenen Systembenutzer in vergleichsweise einfacher Weise implementieren.

Eine weitere Ausführungsform des erfindungsgemäßen Kommunikationssystems ist dadurch gekennzeichnet, dass der Signalbearbeitungseinheit ein Speicher zugeordnet ist, der Dienstleistungsdaten enthält, mit denen Dienstleistungen innerhalb oder außerhalb des Kommunikationssystems insbesondere zeitversetzt (nicht in Realzeit) erbracht werden. Damit ermöglicht das Kommunikationssystem die Generierung von Auskunftsdatenbeständen und die Realisierung von Diensten, die eine Systemeinheit (z.B. Benutzerendgerät, Steuerungseinrichtung, Komponente der Signalbearbeitungseinheit) anfordert. Beispiele sind das Abspielen eines abgespeicherten Films, die Aktivierung des Betriebs von vorprogrammierten Einrichtungen, die Visualisierung von Bildern, die Abfrage von Datenbeständen, etc.

Der Speicher ist vorzugsweise nicht nur für Systemeinheiten, sondern auch für mindestens ein weiteres (externes) Kommunikationssystem, insbesondere für ein öffentliches Fest- oder Mobilfernmeldenetz, zugänglich.

Der Speicher ist eine Festplatte oder ein lösbares Speichermedium wie beispielsweise eine CD-ROM oder eine Diskette.

Schließlich ist eine weitere Ausführungsform des erfindungsgemäßen Kommunikationssystems dadurch gekennzeichnet, dass das Benutzerendgerät ein Fernsprechendgerät und/oder ein Datenendgerät, insbesondere ein Datenverarbeitungsgerät ist. Dies ermöglicht die Implementierung interaktiver Dienste wie Internet-, Sprach-, Daten-, Video- und Betriebssteuerungsdienste im System.

Dies wird in dem erfindungsgemäß System beispielsweise durch Zeitmultiplex (TDMA)-Verarbeitung der Informationen erzielt, die in der Türanlage bearbeitet bzw. im System übertragen werden, wobei beispielsweise der DECT-Standard verwendet wird.

Zur Implementierung dieser Dienste und zur Übertragung von Sprachinformationen und Daten über das MATV/SMATV-Netz verfügt das erfindungsgemäße System über folgende Komponenten: Datensprachbasis, Datensprachendgerät, Datensprachmodem, RTC-Adapter.

Datensprachbasis: Diese Komponente ist von zentraler Bedeutung, da sie alle internen Verbindungen (zwischen Benutzerendgeräten und Türanlage) bearbeitet bzw. vermittelt. Sie befindet sich in der Kommunikationszentrale.

Datensprachendgerät: Diese Komponente bearbeitet endgeräteseitig Verbindungen der Benutzer. Sie befindet sich in dem Benutzerendgerät in der Wohnung des Benutzers.

Datensprachmodem: Diese Komponente ist unverzichtbar für die Funktionsweise des Systems. Sie befindet sich zum einen in der Zentrale des Systems und zum anderen in Benutzerendgeräten und ermöglicht die Herstellung von Verbindungen zwischen Systemzentrale und Benutzerendgeräten. Im erfindungsgemäßen Kommunikationssystem arbeitet das Datensprachmodem in den Frequenzen des Rückkanals, während herkömmliche DECT-MODEMs in der Frequenz von 1.9 GHz arbeiten.

RTC-Adapter: Diese Komponente ist die Schnittstelle zwischen dem Benutzerendgerät und dem Fernsprechvermittlungsnetz und ermöglicht interne Verbindungen von dem Endgerät eines Benutzers zu einem weiteren Endgerät des MATV/- SMATV-Netzes; diese Komponente ermöglicht es weiterhin, Verbindungen von der Türsprechanlage zu empfangen und gehende und kommende Verbindungen über das Fernsprechvermittlungsnetz herzustellen.

Das erfindungsgemäße System ermöglicht gleichzeitig mindestens eine interne Verbindung zwischen Personen bzw. Einrichtungen in den Wohneinheiten untereinander und darüber hinaus Verbindungen zwischen der Türanlage und den Wohneinheiten.

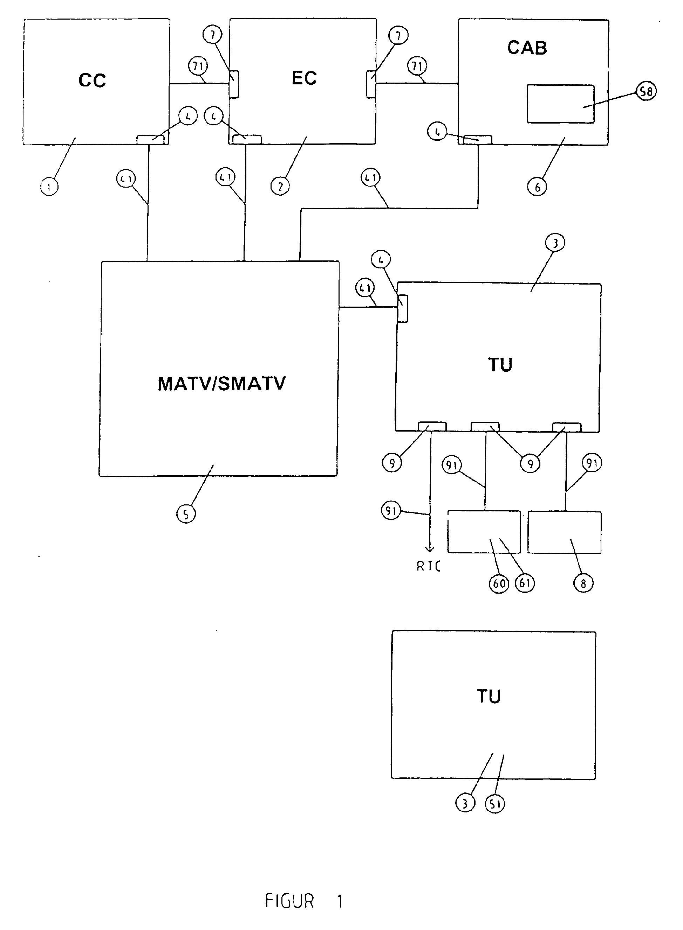

Ein weiterer wichtiger Vorteil des Systems besteht darin, dass MATV/SMATV-Netze zur Fernbetriebssteuerung befähigt werden, wobei Parameter der Kopfeinheiten (6 in Figur 1) durch Systemverwalter und/oder Benutzer dieser Netze, über eine RS232-Verbindung, über das Fernsprechvermittlungsnetz oder über das MATV/SMATV-Netz gesteuert werden.

Dies wird in dem erfindungsgemäßen System mittels der vorstehend genannten Komponenten Datensprachbasis, Datensprachendgerät, Datensprachmodem und RTC-Adapter und mittels der Komponenten Betriebs-Steuerungseinheit, Steuerungsprozessor, Telefonmodem, Schnittstellenbus RS232, Schnittstellenbus 485 realisiert, wie noch ausgeführt wird.

Betriebs-Steuerungseinheit: Diese Komponente befindet sich in der Kommunikationszentrale und bearbeitet die Daten, die von der Datensprachbasis empfangen werden und wandelt diese Daten in ein für die weitere Bearbeitung geeignetes Format um.

Steuerungsprozessor: Diese Komponente bearbeitet die Betriebssteuerungsdaten der Kopfeinheiten und befindet sich in der Steuerungseinrichtung (2 in Figur 1).

Telefonmodem: Diese Komponente befindet sich in der Steuerungseinrichtung (2 in Figur 1) und ermöglicht die Einleitung der Betriebssteuerungs- bzw. Signalisierungsdaten der Kopfeinheit über das Fernsprechnetz.

Schnittstellenbus RS 232: Diese Komponente ermöglicht die Ein- und Ausgabe der Daten der Betriebssteuerungs- bzw. Signalisierungsdaten der Kopfeinheit eines lokalen Rechners (PC). Sie befindet sich in der Steuerungseinheit und in der Kommunikationszentrale.

Schnittstellenbus 485: Diese Komponente ermöglicht Verbindungen zwischen der Steuerungseinrichtung (2 in Figur 1) und den Einrichtungen, die die Kopfeinheit des MATV/SMATV-Netzes integriert. Sie befindet sich in der Steuerungseinrichtung (2 in Figur 1) und in der Kommunikationszentrale.

Das erfindungsgemäße System, das in dieser Weise ausgestaltet ist, ermöglicht den Benutzern und Verwaltern des MATV/SMATV-Netzes eine Anpassung und Wartung des Netzes vor Ort, ohne Notwenigkeit zu reisen, da diese Aufgabe direkt von jedem beliebigen - hierzu berechtigten - Benutzerendgerät oder am Ort des Netzverwalters sei es mittels Fernesprecheinrichtungen oder mittels Internet erledigt werden kann.

Ein weiterer Vorteil des erfindungsgemäßen Systems besteht darin, den MATV/SMATV-Netzen ein Sichtinformationssystem zur Verfügung zu stellen, das aus einem oder mehreren Fernsehkanälen besteht, die in der Steuerungseinrichtung (2 in Figur 1) gebildet werden, wobei deren Generierung und Modifizierung über ein Fernmeldevermittlungsnetz erfolgen kann, beispielsweise über einen lokalen Rechner (z.B. PC) über eine Schnittstelle RS 232 oder über ein Benutzerendgerät.

Dies wird in dem erfindungsgemäßen System mittels des Steuerungsprozessors realisiert, der in der Steuerungseinrichtung (2 in Figur 1) und in einem Bildgenerierungssystem angeordnet ist.

Bildgenerierungssystem: Dieses System generiert Bildschirmanzeigen, die über das SMATV/MATV-Netz übertragen werden. Es besteht aus einem Steuerungsprozessor, einer Speichereinrichtung, einem Subsystem, das Bilder einfügt, ein RG/PAL-Wandler, einem Modulator und einem Ausgangs-Up-Konverter. Das Bildgenerierungssystem ist in der Steuerungseinrichtung (2 in Figur 1) angeordnet.

Das erfindungsgemäße System ermöglicht damit die Übertragung von Bildern zu Benutzerendgeräten über das Fernsprechvermittlungsnetz, über einen lokalen Rechner (PC) oder über ein Benutzerendgerät, wie schon beschrieben.

Ebenso kann das erfindungsgemäße Kommunikationssystem eine Speichereinrichtung aufweisen, die die Akquisition und Speicherung von Bildern ermöglicht.

Ein weiterer Vorteil des erfindungsgemäßen Kommunikationssystems besteht darin, dass Datenübertragungen zwischen den Benutzern des MATV/SMATV-Netzes und der Steuerungseinrichtung (2 in Figur 1) ermöglicht werden. Zugleich ermöglicht es die Verarbeitung dieser Daten mittels des Datenprozessors, den das System aufweist. Damit wird ermöglicht, dass unterschiedliche Einrichtungen, die an das MATV/SMATV-Netz anschließbar sind, von unterschiedlichen Benutzern über das Fernsprechvermittlungsnetz, über einen lokalen Rechner oder über ein Benutzerendgerät gesteuert werden.

Die Erfindung wird nun anhand der Zeichnung beschrieben.

Es zeigt:
- Figur 1: ein Blockschaltbild des erfindungsgemäßen Kommunikationssystems;
- Figur 2: ein Blockschaltbild einer Kommunikationszentrale des erfindungsgemäßen Kommunikationssystems nach Figur 1;
- Figur 3: ein Blockschaltbild eines Sprachdatenmodems des erfindungsgemäßen Kommunikationssystems nach Figur 1;
- Figur 4: ein Blockschaltbild einer Steuerungseinheit des erfindungsgemäßen Kommunikationssystems nach Figur 1; und
- Figur 5: ein Blockschaltbild eines Benutzerendgeräts des erfindungsgemäßen Kommunikationssystems nach Figur 1;
- Figur 6: ein Blockschaltbild einer RTC-Adapter-Schaltungsanordnung des erfindungsgemäßen Kommunikationssystems nach Figur 1;
- Figur 7: ein Blockschaltbild einer elektronischen Türbedienungseinheit des erfindungsgemäßen Kommunikationssystems nach Figur 1; und
- Figur 8: ein Blockschaltbild einer weiteren Ausführungsform des erfindungsgemäßen Kommunikationssystems.

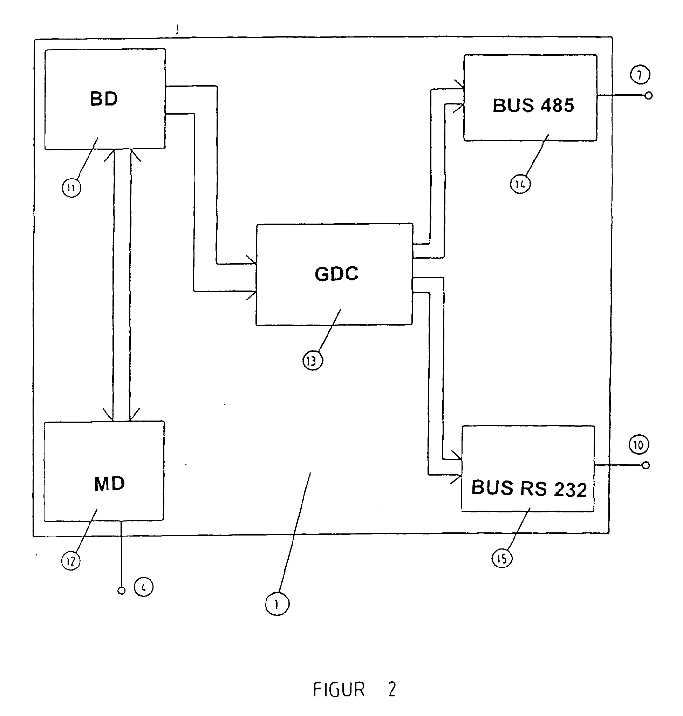

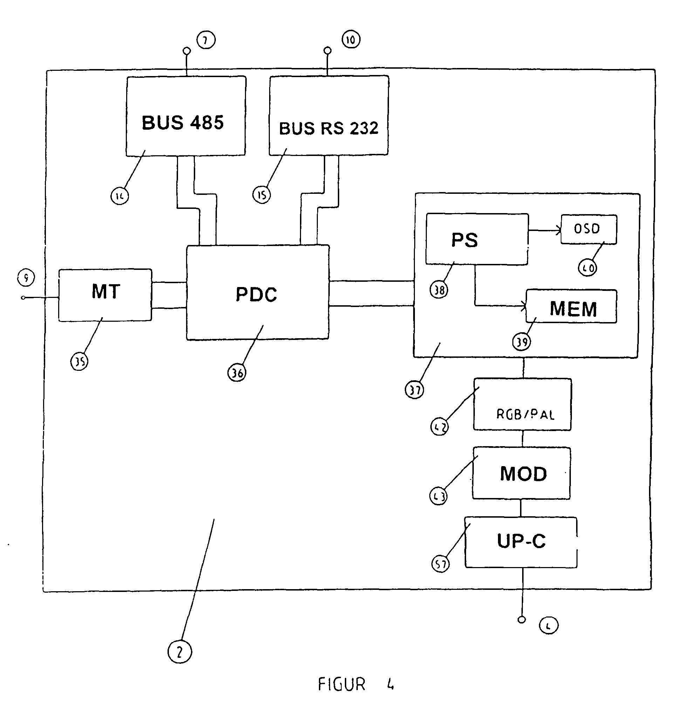

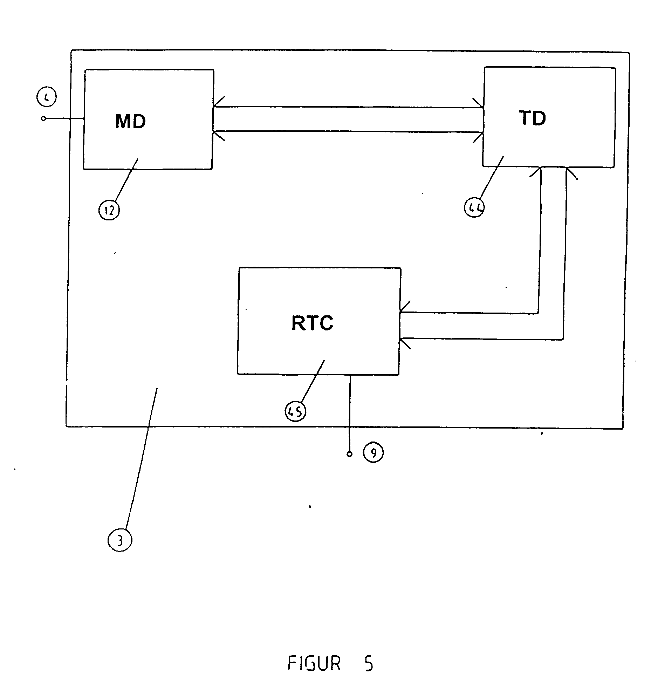

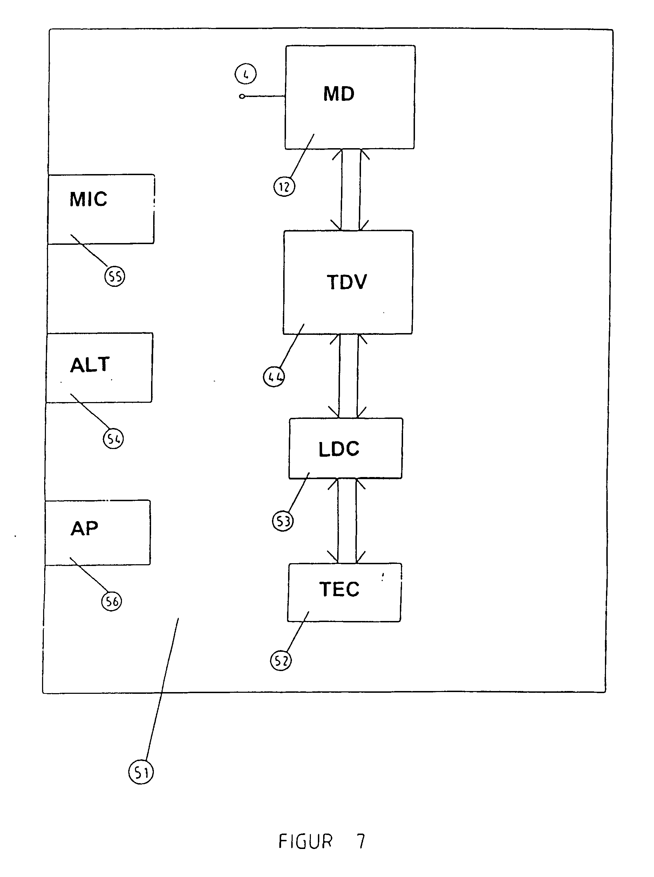

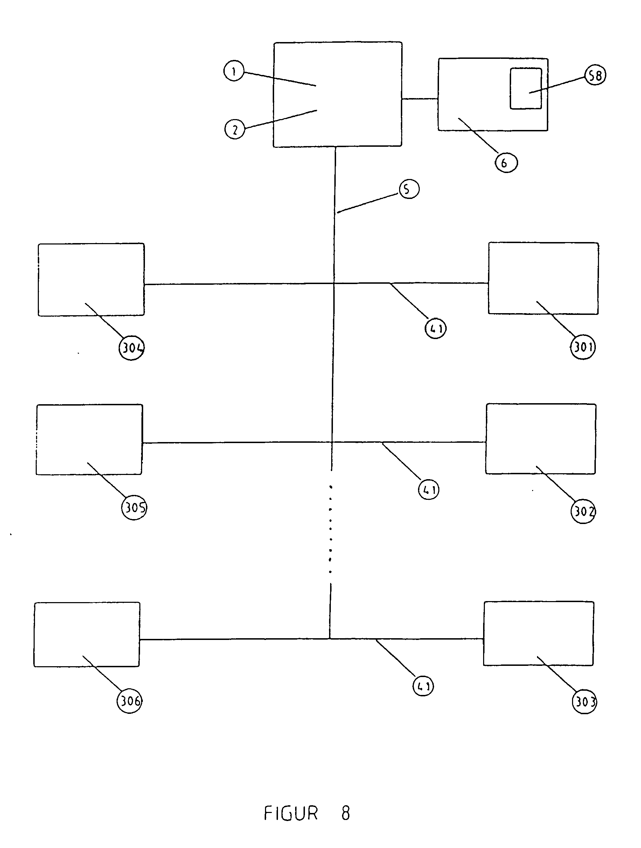

Wie aus Figur 1 ersichtlich weist das erfindungsgemäße Kommunikationssystem eine Kommunikationszentrale 1, die die Funktion der zentralen Steuerung hat und auch in Figur 2 dargestellt ist, eine Steuerungseinheit 2 (Figur 4) und mehrere Benutzerendgeräte 3 (Figur 5) auf. Die Benutzerendgeräte 3 sind vorzugsweise Fernsprechgeräte bzw. Einheiten, die ein Fernsprechendgerät 8 aufweisen. Ein Benutzerendgerät bildet das zentrale Kommunikationsendgerät 51 (Figur 7). Die genannten Systemkomponenten 1, 2, 3 und 51 sind über Verbindungselemente (Stecker) 4 über Verbindungskabel 41 mit einem MATV/SMATV-Netz 5 verbunden. In einer Ausführungsform der Erfindung besteht das MATV/SMATV-Netz aus genau einem Antennenkabel 5, insbesondere aus einem Koaxialkabel, wie dies auch in Figur 8 dargestellt ist.

Das erfindungsgemäße System ist in der Weise ausgestaltet, dass es außer Kommunikationsverbindungen zwischen dem zentralen Kommunikationsendgerät 51 einerseits und jeweils einem oder mehreren Benutzerendgeräten 3 (z.B. 301, 302, ... oder 30n; Figur 8) andererseits auch Kommunikationsverbindungen zwischen zwei und mehr Benutzerendgeräten 3 (z.B. 301, 302, ... oder 30n; Figur 8) herstellt. So wird in dem Kommunikationssystem gemäß der Erfindung beispielsweise eine Kommunikationsverbindung, insbesondere eine Fernsprechverbindung zwischen dem Benutzerendgerät 301 und dem Benutzerendgerät 302 hergestellt. Das erfindungsgemäße Kommunikationssystem bietet damit auch die Funktionen einer Fernmelde- bzw. Fernsprechnebenstellenanlage.

Ebenso steuert das System Kommunikationsverbindungen, an denen eine andere Systemeinheit (z.B. Alarmsensoren, Datenspeicher 58, etc.) und ein Benutzerendgerät 3 beteiligt ist.

Im Rahmen der hergestellten Kommunikationsverbindungen werden analoge und/oder digitale Daten übertragen.

Die Steuerungseinheit 2 ist auch mit der Kommunikationszentrale 1 und mit verschiedenen Einheiten, zu denen die Kopfeinheit 6 des MATV/SMATV-Systems gehört, über Kommunikationselemente 7 mittels eines Verbindungsbusses 71 verbunden. Das Benutzerendgerät 3 ist mit einem Fernsprechendgerät 8, mit einem weiteren Kommunikationssystem, insbesondere mit einem Fernsprechvermittlungssystem, über Verbindungselemente bzw. Anschlüsse 9 mittels Kabel 91 und an wenigstens ein Fernsehgerät 60 und/oder ein Radiogerät 61 mittels Kabel 91 verbunden. Das erfindungsgemäße System kann mit einem weiteren Kommunikationssystem auch über die Zentrale 1 oder die Steuerungseinheit 2 verbunden sein.

Die Kopfeinheit 6 ist eine Signalbearbeitungseinheit, die Signale, die über die mindestens eine Antenne empfangen werden, bearbeitet.

Die Signalbearbeitungs- bzw. Kopfeinheit 6 ist im erfindungsgemäßen Kommunikationssystem von Systemeinheiten (z.B. 1, 2, 3, 51, 58) und/oder von einem weiteren Kommunikationssystem, insbesondere von einem Fernmeldenetz steuerbar.

Der Signalbearbeitungseinheit 6 ist ein Speicher 58 zugeordnet, der Dienstleistungsdaten enthält, mit denen Dienstleistungen innerhalb oder außerhalb des Kommunikationssystems insbesondere zeitversetzt (nicht in Realzeit) erbracht werden. So lassen sich Dienste realisieren, die eine Systemeinheit (z.B. Benutzerendgerät, Steuerungseinrichtung, Komponente der Signalbearbeitungseinheit) anfordert. Hierzu gehört das Abspielen eines abgespeicherten Films, die Aktivierung des Betriebs von vorprogrammierten Einrichtungen, die Visualisierung von Bildern, die Abfrage von Datenbeständen, etc.

Der Speicher 58 ist für Systemeinheiten und/oder für mindestens ein externes Kommunikationssystem, insbesondere für ein Fest- oder Mobilfernmeldenetz, zugänglich. Die Daten, die in dem Speicher 58 gespeichert sind, sind in Systemeinheiten und/oder in mindestens ein externes Kommunikationssystem, insbesondere in ein Fest- oder Mobilfernmeldenetz, übertragbar. Der Speicher 58 ist insbesondere eine Festplatte, eine CD-ROM oder eine Diskette.

Insbesondere kann mehr als eine Systemeinheit gleichzeitig Zugang zu dem Speicher 58 haben, um auf dieselben oder auf unterschiedliche Daten, die in dem Speicher 58 abgespeichert sind, zuzugreifen und/oder um Daten einzuschreiben.

Das erfindungsgemäße Kommunikationssystem kann weiterhin in der Weise ausgestaltet sein, dass Informationen (Betriebsinformationen) zwischen der Signalbearbeitungseinheit 6 und mindestens einem Benutzerendgerät 3 uni- oder bidirektional übertragen werden. Diese Informationen bezeichnen Betriebszustände der Signalbearbeitungseinheit 6 und/oder die Funktionsweise dieser Einheit 6 . Dabei bildet das Benutzerendgerät 3 Signale, die auf Betriebszustände und/oder die Funktionsweise der Einheit 6 einwirken. Diese Signalbearbeitungseinheit ist eine an sich bekannte Kopfeinheit, die beispielsweise Verstärker, Wandler, Prozessoren, Transmodulatoren, usw. aufweist. Beispielsweise bildet die Kopf- bzw. Signalbearbeitungseinheit ein Parameterauswahlmenü und überträgt dieses an ein Benutzerendgerät, das das Menü anfordert, beispielsweise in der Absicht, die gerade aktivierten Parameter der Kopfeinheit zu ändern. Beispielsweise wird von einem Benutzerendgerät und mittels des Menüs die Information an die Kopfeinheit übertragen, dass die Abstimmung eines bestimmten Kanals zu ändern ist. Andere Beispiele für die Parameter sind Ausgangsspannung, Audio- und Videopegel und Änderung eines Empfangskanals.

Eine andere Betriebsinformation, die von einem Benutzerendgerät 3 übermittelt wird, ist eine Softwaredatei, die einen modifizierten Betrieb der Kopfeinheit 6 definiert. Auf diese Weise kann eine Person, die das System zu verwalten hat, in einfacher Weise den Betrieb der Kopfeinheit teilweise oder komplett steuern. Beispielsweise können den Benutzerendgeräten 3 und der Einheit 51 Benutzerberechtigungen zugeordnet werden; hierzu gehören neue Benutzerberechtigungen, die Zuordnung von Diensten zu Benutzern, das Sperren von Diensten wegen Nichtzahlung, System- und Diensteabschaltungen usw.

Das Kommunikationssystem kann auch in der Weise ausgestaltet sein, dass Informationen (Betriebsinformationen) zwischen der Signalbearbeitungseinheit 6 und mindestens einem anderen Kommunikationssystem uni- oder bidirektional übertragen werden, wobei die Informationen Betriebszustände der Signalbearbeitungseinheit 6 und/oder die Funktionsweise dieser Einheit 6 bezeichnen. Das andere Kommunikationssystem, insbesondere ein Fernsprechnetz, bildet Signale, die auf Betriebszustände und/oder die Funktionsweise der Einheit 6 einwirken.

Figur 2 zeigt ein Blockschaltbild der Kommunikationszentrale 1. Wie aus der Figur zu entnehmen ist, besteht die Kommunikationszentrale 1 aus einer Datensprachbasis 11, einem Datensprachmodem 12, einer Betriebssteuerungseinheit 13, aus einem Schnittstellenbus 485 14 und einem Schnittstellenbus RS232 15.

Es weist weiterhin Verbindungselemente 4 für die Verbindung mit dem MATV/- SMATV-Netz 5, Verbindungselemente 7 zur Verbindung mit der Steuerungeinheit 2 und verschiedenen Einheiten in der Kopfeinheit 6 sowie Verbindungselemente 10 zur Verbindung von Einheiten, die Eingangsdaten verarbeiten und Ausgangsdaten bilden, auf.

Die Datensprachbasis 11 besteht aus einem Mikroprozessor, der beispielsweise entsprechend dem DECT-Kommunikationsstandard arbeitet, und aus einem Speicher, der die Betriebssoftware des Mikroprozessors speichert.

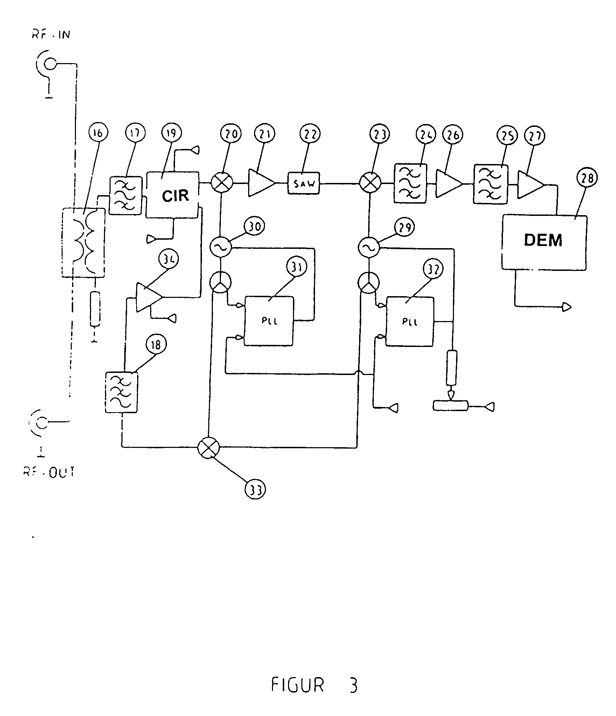

Das Datensprachmodem 12, besteht - wie in Figur 3 dargestellt - aus einem Eingang/Ausgang/-Koppelelement 16, einem Eingangs-Bandpassfilter 17 und einem Ausgangs-Bandpassfilter 18, welche die Eingangs-Ausgangsstufe der Anordnung bilden. Die Eingangs- und Ausgangssignale werden mittels einer Umschaltungsanordnung 19 getrennt.

Zur Bearbeitung des Eingangssignals weist das Datensprachmodem 12 eine erste Mischschaltung 20 auf, deren Funktion es ist, das Eingangssignal in eine Zwischenfrequenz (110 MHz) umzusetzen, wobei das Ausgangssignal einer Stufe der ersten Zwischenfrequenz zugeführt wird, welche aus einem Verstärker 21 und einem SAW-Filter 22 besteht, wobei eine zweite Mischschaltung 23 das Signal in eine zweite Zwischenfrequenz (9.996 MHz) wandelt. Danach wird das Signal in eine zweite Stufe der Zwischenfrequenz eingegeben, welche aus zwei Bandpässen 24 und 25 und Verstärkern 26 und 27 besteht.

Danach wird das Signal einem Quadratur-Demodulator 28 zugeführt, aus welchem Signal-(GFSK Gaucian Frequency Shiftling Keying)-Daten extrahiert werden, die dann der Datensprachbasis 11 zugeführt werden. Die Mischwandlersignale werden durch lokale Oszillatoren 29 und 30 generiert, die von PLL-Schaltungen 32 und 31 gesteuert werden.

Das Ausgangssignal wird aus den Daten generiert, die von der Datensprachbasis 11 stammen. Das Signal wird frequenzmoduliert und einem Ausgang-Mischer 33 zugeführt und danach in einem Ausgangsverstärker 34 verstärkt und über die Umschaltanordnung 19 dem Ausgang zugeführt.

Die Betriebs-Steuerungseinheit 13 besteht aus einem Mikroprozessor und einer Speichereinrichtung, die die Betriebssoftware des Mikroprozessors speichert. Der Mikroprozessor verwaltet die Kommunikationsbusse RS 2332 und 485.

Figur 4 zeigt das Blockschaltbild der Steuerungseinheit 2. Diese besteht aus einem Telefonmodem 35 für den Eingang und Ausgang der Daten aus dem und in das Fernsprechvermittlungsnetz, einem Schnittstellenbus 485 14 und einem Schnittstellenbus RS 232 15, über die die Anbindung an die Komponenten der den Kopfeinheit 6 bzw. an unterschiedliche Datenverarbeitungseinrichtungen hergestellt wird, sowie aus einem Steuerungsprozessor 36, der den gesamten notwendigen Systemprozess durchführt. Außerdem weist die Steuerungseinrichtung 2 ein Untersystem 37 auf, das Bilder einfügt und das Bildschirmanzeigen generiert, die über das MATV/SMATV-Netz 5 zu den Netzbenutzern übertragen werden. Dieses Untersystem 37 besteht aus einem Sekundärprozesssor 38, der die gesamte Konfiguration erstellt und den Betrieb des Untersystems steuert, dies in Abhängigkeit von Befehlen des Steuerungsprozessors 36, von einer Speichereinrichtung 39, die Videobildschirmanzeigen speichert, und aus einer On Screen Display-Schaltung (OSD) 40, die an ihrem Ausgang die Videobildschirmanzeigen im Format RGB abgibt.

Am Ausgang des Bildeinfügungssubsystems 37 ist in der Steuerungseinrichtung 2 ein RGB-PAL-Wandler 42 angeordnet, ein Modulator 43 und ein Up-Konverter 57, der die Signale im RGB-Format, die von dem Subsystem 37 generiert worden sind, in Signale im PAL-Standard-Format wandelt, und in einem Hochfrequenz (RF)-Kanal angeordnet sind, für deren Verteilung über das MATV/SMATV-Netz.

Ebenso verfügt die Steuerungseinheit 2 über Anschlüsse 4 zur Verbindung mit dem MATV/SMATV-Netz 5, Anschlüsse 7 zur Verbindung mit dem Verbindungsbus 485 mit der Kopfeinheit 6 und der Kommunikationszentrale 1, Anschlüsse 9 für den Zugang zum dem Fernsprechvermittlungsnetz und Anschlüsse 10 des Typs RS 232 für Datenverarbeitungseinrichtungen mit Datenein-und -ausgängen.

Figur 5 zeigt das Blockschaltbild des Benutzerendgeräts 3, das wie dargestellt ein Datensprachmodem 12, ein Datensprachendgerät 44 und einen RTC-Adapter 45 aufweist. Es weist außerdem Anschlüsse 9 zum Anschluss an ein Fernsprechendgerät 8 und an das Fernsprechnetz auf sowie Anschlüsse 4 zum Anschluss an an das MATV-SMATV-Netz 5.

Das Datensprachendgerät 44 weist einen Mikroprozessor auf, dem Hardwarekomponenten hinzugefügt worden sind, die notwendig sind, um die Prozeduren im DECT-Standard durchzuführen.

Dieses Datensprachendgerät 44 verwaltet die Verbindungen zwischen dem Benutzerendgerät 3 und der Kommunikationszentrale 1 und führt die Steuerung des RTC-Adapters 45 und des Datensprachmodems 12 durch, um die Funktionen des Benutzerendgeräts 3 durchzuführen, wie beispielsweise (Sprach-)-Verbindungen zu halten, die elektronische Türsprechanlage zu bedienen, insbesondere die Tür zu öffnen, Befehle, die über die Tastatur des Endgeräts 3 eingegeben werden, der Kopfeinheit zuzuführen und die elektronische Türsprechanlage zu konfigurieren.

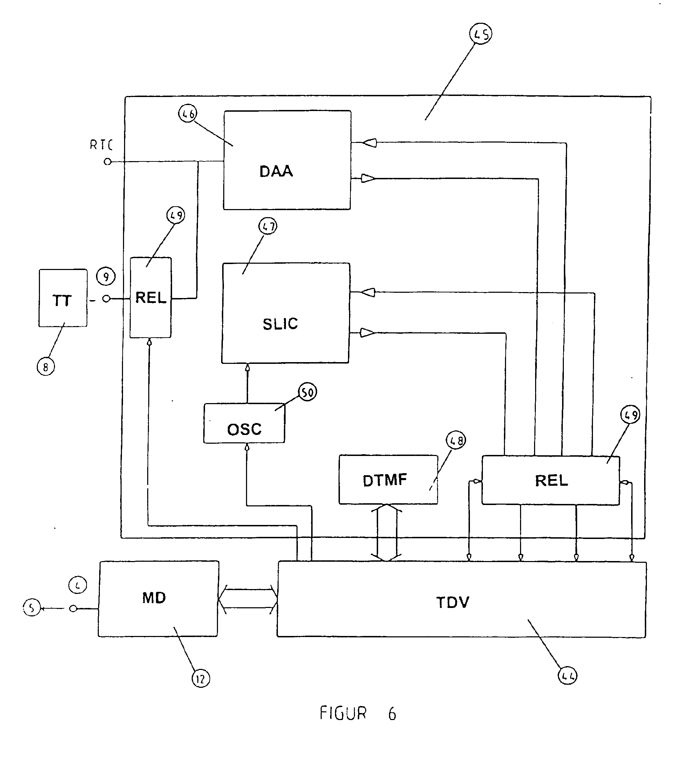

Die RTC-Adapterschaltung 45, die in Figur 6 dargestellt ist, weist eine Schaltung DAA 46, eine Schaltung SLIC 47, einen DTMF-Detektor 48, zwei Relais 49 und einen Oszillator 50 auf. Die Adapterschaltung 45 stellt über das Anschlusselement 9 eine Verbindung zwischen Fernsprechvermittlungsnetz und Datensprachendgerät 44 her.

Das MATV/SMATV-Netz 5 ist mit diesem Endgerät 44 über das Datensprachmodem 12 verbunden. Die Aufgabe des Adapters 45 besteht darin, die verschiedenen Verbindungen, die von einer herkömmlichen Telefonleitung oder von einer internen Telefonleitung kommen, über das Datensprachmodem 12 über das Koaxialkabel 41 (siehe Figur 1) zu führen. Er ist in der Weise ausgestaltet, dass interne oder externe Verbindungen weiterzuschalten, beliebige Verbindungen zu halten, DTMF-Töne einzufügen, um gewünschte Funktionen auszuwählen, beispielsweise die Auswahl des Verbindungstyps (interne oder externe Verbindung), Aktivierung eines Wartezustandes, Öffnen der Tür und Versenden von Daten.

Die Schaltung DAA 46 fügt die DTMF-Töne, die von dem Datensprachendgerät 44 kommen, in die herkömmliche Telefonleitung bzw. -verbindung ein, extrahiert DTMF-Töne, die eine Bedienperson von ihrem Telefon über die Telefonleitung zu dem Datensprachendgerät 44 übermittelt hat. Diese Vorrichtung führt auch die Funktion aus, Verbindungen zu halten, da DAA 46 im Zustand "abgenommener Telefonhörer" bleibt, wenn während einer hergestellten externen Verbindung eine interne Verbindung avisiert wird, die hergestellt werden soll. Die Elemente bzw. Anschlüsse, die diese Schaltung steuern, sind EN_HOOK, die die Funktion des Zustandes "Telefonhörer abgenommen" realisiert, und DET_RING, die informiert, dass Verbindungen aus dem Vermittlungsnetz anstehen.

Der Adapter 45 weist auch eine Schaltung SLIC 47 auf, deren Funktion es ist, eine Telefonleitung nachzubilden, an die das Telefon angeschlossen ist, wenn eine interne Verbindung über das Koaxialkabel ansteht. Diese Anordnung generiert das Signal RING, das erforderlich ist, damit das Telefon Klingeltöne abgibt, sowie die Spannung der Leitung, die den Betrieb des Endgeräts ermöglicht. Die wichtigsten Steuerleitungen, die die Schaltung SLIC steuern, sind DET_HOOK, die für die Erfassung des Zustands "Telefonhörer abgenommen" des Benutzerendgeräts benutzt wird, und EN_RING, die benutzt wird, um die Übertragung eines Klingelsignals zu dem Benutzerendgerät zu ermöglichen.

Eine weitere Schaltung, die in den Adapter 45 aufgenommen wird, ist ein DTMF-Detektor 48, der die Töne erfasst, die der Benutzer im Falle einer externen Verbindung über das Fernsprechvermittlungsnetz einführt, oder die der Benutzer im Falle einer internen Verbindung über die Schaltung SLIC 47 einführt. Die erfasste Information wird in das Datensprachendgerät 44 eingegeben, um dort analysiert zu werden, so dass dem Benutzer ermöglicht wird, seine Tastatur seines Telefons 8 zu benutzen, um die Verbindungen herzustellen bzw. weiterzuschalten, zu halten, in einen Wartezustand zu versetzen, die Tür der Wohnanlage zu öffnen oder einen beliebigen Befehl an die Kopfeinheit 6 zu senden.

Figur 7 zeigt eine andere Ausführungsform des Benutzerendgeräts 3. Diese Ausführungsform stellt die elektronische Türbedienungsvorrichtung 51 dar. Diese Vorrichtung 51 weist ein Datensprachmodem 12 auf, ein Datensprachterminal 44, eine Tastatur 52 für die Eingabe von Daten, eine optische Anzeigeeinrichtung LCD 53 zur Anzeige von Nachrichten, ein Lautsprecher 54, ein Mikrophon 55 und eine Türöffnungseinrichtung 56.
Die elektronische Türbedienungsvorrichtung 51 verwaltet bzw. steuert Kommunikation und sowie das Öffnen der Tür.

Zusammenfassend ist hervorzuheben, dass das erfindungsgemäße System in der Weise ausgestaltet ist, dass (Sprach- und/oder Daten-)Verbindungen beispielsweise zwischen den Systemkomponenten 1, 2, 3, 6, 8, 9, 51, 60, 61, ... usw. in bidirektionaler Form hergestellt werden, und dass der gesamte Betrieb der Kommunikationsverbindungen mit allen Systemkomponenten ermöglicht wird. Insbesondere ermöglicht das System, Benutzungsrechte zu verwalten.
Ebenso ermöglicht es den Anschluss beliebiger Endgeräte über das Benutzerendgerät 3.
Der Anschluss von Endgeräten an das Antennenkabel (insbesondere an das Koaxialkabel) 5, kann über beliebige Kanäle (RF, Koaxialkabel, Kabel mit Leiterpaaren, usw.) erfolgen, wobei die jeweiligen Schnittstellen vorgesehen werden.

Schließlich verfügt das erfindungsgemäße System über die Möglichkeit der Verbindung mit öffentlichen Netzen, sowohl von Systemendgeräten als auch von Verwaltungsgeräten aus.

### Bezugszeichenliste

- 1, CC: Zentral-Steuerungseinheit, Kommunikationszentrale
- 2, EC: Steuerungseinheit
- 3, 301, ..., 30n, TU: Benutzerendgerät
- 4: Schnittstellen
- 5, MATV/SMATV: Antennenkabel, MATV/SMATV-Netz
- 6, CAB: Signalbearbeitungseinheit, Kopfeinheit
- 7: Schnittstelle
- 8, TT: Fernsprecher
- 9: Verbindungselement
- 10: Schnittstelle RS232
- 11, BD: Datensprachbasis
- 12, MD: Datensprachmodem
- 13, GDC: Steuerungseinheit
- 14, BUS 485: Schnittstellenbus 485
- 15, BUS RS232: Schnittstellenbus RS 232
- 16: Eingangs-/Ausgangs-Koppelelement
- 17: Eingangsbandpaß
- 18: Ausgangsbandpaß
- 19, CIR: Umschaltungsanordnung
- 20: Erste Mischerschaltungsanordnung
- 21: Verstärker
- 22, SAW: SAW-Filter
- 23: Zweite Mischerschaltungsanordnung
- 24: Bandpaß
- 25: Bandpaß
- 26: Verstärker
- 27: Verstärker
- 28, DEM: Quadraturdemodulator
- 29: Lokaler Oszillator
- 30: Lokaler Oszillator
- 31: PLL
- 32: PLL
- 33: Ausgangsmischer
- 34: Ausgangswiderstand
- 35, MT: Fernsprechmodem
- 36: Steuerungsprozessor
- 37: Subsystem zur Einfügung von Bildern
- 38, PS: Sekundärprozessor
- 39, MEM: Speicheranordnung
- 40, OSD: Schaltungsanordnung "On Screen Display"
- 41: Koaxialkabel
- 42, RGB/PAL: RGB-PAL-Konverter
- 43, MOD: Modulator
- 44, TDV: Datensprachendgerät
- 45, RTC: RTC-Adapter
- 46, DAA: DAA-Schaltungsanordnung
- 47, SLIC: SLIC-Schaltungsanordnung
- 48, DTMF: DTMF-Detektor
- 49, REL: Relaisanordnung
- 50, OSC: Oszillator
- 51: Elektronische Hausrufeinheit, zentrales Kommunikationsendgerät
- 52, TEC: Tastatur
- 53: LCD
- 54, ALT: Lautsprecher
- 55, MIC: Mikrophon
- 56, AP: Türöffnungseinheit
- 57, UP-C: Up-Konverter
- 58: Datenträger, CD-ROM, Diskette
- 60: Fernseher
- 61: Radio
- 71: Verbindungsbus
- 91: Kabel

## Patentansprüche

1. Kommunikationssystem, mit mindestens einer Radio- und/oder Fernsehantenne, mit mindestens einem Antennenkabel (5), an das Radio- und/oder Fernsehgeräte (60, 61) anschließbar sind, mit einer Zentral-Steuerungseinheit (1), und mit Benutzerendgeräten (3, 51),
**dadurch gekenneichnet,**
dass das Kommunikationssystem in der Weise ausgestaltet ist, dass die Zentral-Steuerungseinheit (1) an das Antennenkabel (5) angeschlossen ist, dass Benutzerendgeräte (3) Fernsprechendgeräte sind und dass die Zentral-Steuerungseintteit (1) Sprachverbindungen zwischen mindestens zwei Benutzerendgeräten (3) steuert.

2. Kommunikationssystem nach Anspruch 1, **dadurch gekennzeichnet,**
**dass** das Kommunikationssystem mindestens eine Signalbearbeitungseinheit (6) aufweist, die von der Antenne empfangene Signale bearbeitet, und dass das Kommunikationssystem in der Weise ausgestaltet ist, dass Informationen (Betriebsinformationen) zwischen der Signalbearbeitungseinheit (6) und mindestens einem Benutzerendgerät (3, 51) und/oder mindestens einem weiteren Kommunikationssystem uni- oder bidirektional übertragen werden, dass die Informationen Betriebszustände der Signalbearbeitungseinheit (6) und/oder die Funktionsweise dieser Einheit (6) bezeichnen.

3. Kommunikationssystem nach Anspruch 2, **dadurch gekennzeichnet, dass** die Signalbearbeitungseinheit (6) von einem Benutzerendgerät (3, 51), oder von einem weiteren Kommunikationssystem, insbesondere von einem Fernmeldenetz steuerbar ist.

## Claims

1. A communications system, comprising at least one radio and/or television aerial, comprising at least one aerial cable (5) to which the radio and/or television receiver (60, 61) can be connected, comprising a central control unit (1) and comprising user terminals (3, 51),
**characterised in**
**that** the communications system is configured in such a manner that the central control unit (1) is connected to the aerial cable (5), that the user terminals (3) are television receivers and that the central control unit (1) controls speech connections between at least two user terminals (3).

2. The communications system according to claim 1, **characterised in that** the communications system has at least one signal processing unit (6) which processes signals received by the aerial and that the communications system is configured in such a manner that information (operating information) is transmitted unidirectionally or bidirectionally between the signal processing unit (6) and at least one user terminal (3, 51) and/or at least one further communications system, that the information designates operating states of the signal processing unit (6) and/or the operating mode of this unit (6).

3. The communications system according to claim 2, **characterised in that** the signal processing unit (6) can be controlled by a user terminal (3, 51), or by a further communications system, in particular by a telecommunications network.

## Revendications

1. Système de communication, comprenant au moins une antenne radio et/ou une antenne de télévision, au moins un câble d'antenne (5), auquel peuvent être raccordés des appareils radio et/ou téléviseurs (60, 61), une unité de commande centrale (1) et des terminaux utilisateur (3, 51),
**caractérisé en ce que**
le système de communication est conçu de façon que l'unité de commande centrale (1) soit raccordée au câble d'antenne (5), **en ce que** les terminaux utilisateur (3) sont des terminaux téléphoniques et **en ce que** l'unité de commande centrale (1) commande des liaisons phoniques entre au moins deux terminaux utilisateur (3).

2. Système de communication selon la revendication 1, **caractérisé en ce que**
le système de communication présente au moins une unité de traitement de signaux (6), qui traite des signaux reçus de l'antenne, et **en ce que** le système de communication est conçu de façon que des informations (informations de service) soient transmises de façon unidirectionnelle ou bidirectionnelle entre l'unité de traitement de signaux (6) et au moins un terminal utilisateur (3, 51) et/ou au moins un autre système de communication, **en ce que** les informations désignent des états de service de l'unité de traitement de signaux (6) et/ou le mode de fonctionnement de cette unité (6).

3. Système de communication selon la revendication 2, **caractérisé en ce que** l'unité de traitement de signaux (6) peut être commandé par un terminal utilisateur (3, 51) ou par un autre système de communication, en particulier à partir d'un réseau de télécommunication.
